(19) Europäisches Patentamt / European Patent Office / Office européen des brevets

(11) **EP 4 011 828 A1**

(12) **EUROPEAN PATENT APPLICATION**

(43) Date of publication:
**15.06.2022 Bulletin 2022/24**

(51) International Patent Classification (IPC):
***C01B 32/194*** (2017.01)

(21) Application number: **20213252.8**

(52) Cooperative Patent Classification (CPC):
**C01B 32/194**

(22) Date of filing: **10.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universiteit Antwerpen 2000 Antwerpen (BE)**

(72) Inventors:
• **Pedrazo Tardajos, Adrian 2000 Antwerpen (BE)**
• **Bals, Sara 2000 Antwerpen (BE)**

(74) Representative: **Jacobs, Tinneke Ivonne C et al Bureau M.F.J. Bockstael N.V. Arenbergstraat 13 2000 Antwerpen (BE)**

(54) **GRAPHENE LAYER TRANSFER METHOD**

(57) The present invention relates to a method (1) of transferring a graphene layer onto a target substrate or support structure. The method comprises obtaining (2) a metal foil (12) onto which the graphene layer (11) is provided, stabilizing the graphene layer (11) by applying (4) a layer (13) of a cellulose-based polymer onto the graphene layer (11), and placing (5) the metal foil (12) with the graphene and the polymer layers in or on an etching solution (25) to dissolve the metal foil (12) supporting the graphene layer (11). The method comprises diluting and/or neutralizing (6) the etching solution (25) after the metal foil (12) has been dissolved, and depositing (7) the graphene layer (11) onto the target (20) by placing (27) the target underneath the graphene layer and removing (28) the diluted and/or neutralized solution until the graphene layer settles onto the target. The method comprises a dry cleaning (10) of the target to remove the polymer layer (13) by embedding the target in activated carbon (31) and heating.

FIG 1

EP 4 011 828 A1

**Description**

**Field of the invention**

The present invention relates to the field of material science and advanced material engineering, and, more specifically, the invention relates to a method of transferring a graphene layer onto a substrate or support structure, such as a sample support for use in (e.g. transmission) electron microscopy.

**Background of the invention**

Graphene possesses useful properties in terms of structure, thermal and electrical conductivity and particularly thickness, e.g. enabling layers of only a single atom thick. Its large surface-to-volume ratio, unique optical properties, high carrier mobility and density and other attributes may be particularly useful as well. These properties can be used in various applications, e.g. as a sample support in the field of electron microscopy.

The field of transmission electron microscopy (TEM) has significantly evolved in recent years. For example, aberration correctors have improved the attainable resolution, and stability and sensitivity have been drastically improved by novel stages and detector designs. However, significant room for improvement remains in the development of sample holders and supports. The sample support is, ideally, as thin and clean as possible, so the interference with the sample signal is limited and known. A sample support grid conventionally comprises a flat surface of a continuous layer, a layer with holes or a mesh. Depending on the sample type, the sample is deposited on the support by a drop-casting procedure, or thin sections of the sample are deposited on the grid via different sample preparation methods. Depending on the nature of the sample, the sample is analyzed on the edge of a hole or on top of a support layer, which allow electrons to pass through.

Conventionally, amorphous carbon-based supports are used, which may typically have a thickness of about 20 nm. However, such sample supports can cause a significant and undesirable background signal, which may be particularly problematic, e.g. for particular types of sample and/or particularly thin samples since they show poor contrast. A poor manufacturing reproducibility of these supports can furthermore easily lead to failed experiments, or at least a waste of time, resources and/or samples, which might be avoidable if only higher quality supports would be readily available.

Graphene films may be a good candidate for such high-quality TEM sample supports. A single layer of graphene, along its crystalline structure, can, at least presently, be considered as the thinnest material conceivable, such that the background signal from this layer, when used as a sample support, can be advantageously low. Moreover, this background signal, when the support is sufficiently uniform and homogeneous, can be easily subtracted from the detected signal since graphene will yield a periodic pattern that can be easily distinguished.

Graphene has also an advantageously high thermal and electrical conductivity, such that it may be ideal for use as support in the analysis of beam-sensitive materials, e.g. reducing the most common damage processes in the TEM by allowing a good dispersion of currents and heat. This, in combination with its thickness, enables a good optimized characterization of beam sensitive materials, including soft-hard interfaces and organic compounds such as capping ligands in the TEM.

It is to be noted that a graphene support is not only useful in TEM imaging, but also in a wide range of other transmission techniques such as electron diffraction techniques, energy-dispersive X-ray spectroscopy (EDX) and electron energy-loss spectroscopy (EELS), in which the signal-to-background ratio can also be improved substantially by reducing the background signal received from the support. Graphene can also be useful for many more applications outside the field of (charged particle) microscopy, such as sensors and microelectromechanical systems. For example, its large surface-to-volume ratio, optical properties, (thermal and electrical) conductivity and high carrier mobility and density can be greatly beneficial for sensor functions.

Unfortunately, graphene TEM grids that are presently commercially available are relatively expensive consumables. More importantly, the graphene of such grids typically fails to achieve a perfect coverage, i.e. does not form a single intact layer over the entire grid area, and areas without poly-methyl methacrylate (PMMA) contamination, which is used in the transfer process, are considerably rare, e.g. the cleanness of the sample support surface is open for improvement. The graphene layer may even show wrinkles, while ideally it should be flat. A clear need exists in the art for a method of manufacturing a sample support having a reproducibly clean, flat, continuous, uniform and homogeneous graphene layer, which has proven to be considerably challenging.

To obtain graphene-based TEM grids, graphene is typically grown on a metallic surface, e.g. copper, by chemical vapor deposition (CVD), from which it is transferred to a desired target using either polymer-based or polymer-free transfer methods. However, depending on the method to transfer the graphene, the quality, the intactness and the amount of remaining organic contaminants can hamper the quality of measurements when used as support in the TEM.

The graphene intactness and purity are strongly dependent on this transfer method, which eventually determines the quality and is therefore a limiting factor for some applications. Again, it is noted that the same concerns may be applicable to many other fields of potential application and not merely limited to TEM analysis, even though the need for high-quality sample support surfaces is clearly very pronounced in this field.

For example, EP 3135631 A1 discloses a method of transferring graphene onto a target substrate having cavities (or holes) or comprising a water soluble layer. A graphene monolayer is grown on a metal foil or a metal thin film on silicon to form a stack. A protective layer is applied onto the stack, e.g. poly(methyl methacrylate) (PMMA), cellulose nitrate (NC), cellulose acetate butyrate (CAB), poly(lactic acid) (PLA), poly(phthalaldehyde) (PPA), poly(bisphenol A carbonate) (PC), or a combination or derivative thereof. A frame is furthermore attached to the protective layer, which comprises a thermal release adhesive polymer layer. This frame provides integrity and allows handling of the sample, while the metal foil or metal thin film (and silicon substrate) are detached or removed. Then, the sample can be dried and deposited onto the target substrate, and the frame can be cut off or thermally released.

EP 2679540 A1 discloses another approach known in the art for, in this case, providing a graphene monolayer on insulating substrates. An adhesive tape is applied to a graphene layer deposited at the bottom (and simultaneously at the top side) of a copper foil in a CVD graphene synthesis process. The adhesive tape is, together with the bottom graphene layer, released from the copper foil by heat at a temperature 1°C to 5°C higher than the release temperature of the adhesive tape. A sacrificial protective layer, e.g. PMMA, is then coated onto the top graphene layer that remains on the foil, the foil is etched away, and the graphene is transferred to the insulating substrate, finally removing the sacrificial layer via dissolution or thermal treatment.

## Summary of the invention

It is an object of embodiments of the present invention to provide in good, efficient and/or cheap methods of transferring a graphene layer onto a substrate or support structure, the substrate and/or support structure with graphene thus obtained and a graphene sample support for use in (e.g. transmission) electron microscopy.

It is an advantage of embodiments of the present invention that a good, reliable, clean, uniform, and/or homogeneous graphene (mono)layer can be provided on a target substrate or structure.

It is an advantage of embodiments of the present invention that a good (e.g. uniform; continuous; large area) coverage and/or high flatness of the graphene layer can be achieved on such target substrate or structure.

It is an advantage of embodiments of the present invention that the graphene can be transferred to the target substrate or structure such as to remain intact or substantially intact.

It is an advantage of embodiments of the present invention that the graphene can be transferred to the target substrate or structure without or with little contamination, such as contamination by polymers or other organic compounds used in the preparation process.

It is an advantage of embodiments of the present invention that such target structure having a clean and high-quality graphene (mono)layer deposited thereon can be particularly useful as a sample support in (e.g. transmission) electron microscopy, e.g. in a TEM grid. For example, the graphene can provide a layer having an advantageously low thickness, high thermal conductivity, high electrical conductivity and/or reproducible (good) uniformity.

It is an advantage of embodiments of the present invention that such target structure can be particularly useful in other applications as well, such as graphene sensors and/or MEMS devices.

It is an advantage of embodiments of the present invention that a (e.g. TEM) sample support is provided that can reduce wastage of resources, time and/or samples in electron microscopy and similar applications due to failed experiments.

It is an advantage of embodiments of the present invention that a background signal obtained when imaging a specimen with TEM or related techniques can be advantageously reduced and/or homogenized, thus allowing a simple numerical subtraction.

It is an advantage of embodiments of the present invention that artefacts during charged particle (e.g. electron) microscopy to a non-conductive specimen can be reduced or avoided. This may, for example, enable or improve the study of specimens that are extremely beam sensitive, e.g. including (but not limited to) soft-hard interfaces and/or damage-sensitive (in)organic compounds, e.g. capping ligands.

It is an advantage of embodiments of the present invention that clean and thin graphene supports are provided that enable or improve the investigation of soft materials, such as surface ligands, or other low-contrast materials by electron microscopy.

A method in accordance with embodiments of the present invention achieves the above objective.

In a first aspect, the present invention relates to a method of transferring a graphene layer onto a target substrate or support structure. The method comprises obtaining a metal foil onto which the graphene layer is provided, stabilizing the graphene layer by applying a layer of a cellulose-based polymer onto the graphene layer, and placing the metal foil having respectively the graphene layer and the cellulose-based polymer layer stacked thereon in or on an etching solution to dissolve the metal foil supporting the graphene layer. The method further comprises diluting and/or neutralizing the etching solution after the metal foil has been dissolved, and depositing the graphene layer directly onto the target substrate or structure by placing the target substrate or structure underneath the graphene layer floating in or on the diluted and/or neutralized etching solution and removing the diluted and/or neutralized etching solution until the graphene layer settles onto the target substrate or structure. The method comprises dry cleaning the target substrate or structure with the graphene layer deposited thereon to remove the cellulose-based polymer layer by embedding the target substrate or structure with the graphene layer in activated carbon and heating the activated carbon.

In a method in accordance with embodiments of the present invention, obtaining the metal foil onto which the graphene layer is provided may comprise growing the graphene layer onto the metal foil by chemical vapor deposition.

A method in accordance with embodiments of the present invention may comprise mechanically flattening the metal foil with the graphene layer provided thereon before applying the cellulose-based polymer layer.

In a method in accordance with embodiments of the present invention, applying the cellulose-based polymer layer may comprise coating the metal foil having the graphene layer attached thereto with a solution of the cellulose-based polymer using a dip-coating method.

In a method in accordance with embodiments of the present invention, the cellulose-based polymer layer may consist of cellulose acetate butyrate (CAB).

In a method in accordance with embodiments of the present invention, the cellulose-based polymer layer may have a thickness in the range of 10 nm to 500 $\mu$m, e.g. in the range of 15 nm to 30 nm, e.g. a thickness of 20 nm.

In a method in accordance with embodiments of the present invention, applying the cellulose-based polymer layer may comprise removing the cellulose-based polymer that was dip-coated directly onto the metal foil on the side opposite of the side where the graphene layer is provided such that the metal foil is exposed and the graphene layer remains covered by the cellulose-based polymer.

In a method in accordance with embodiments of the present invention, placing the metal foil having respectively the graphene layer and the cellulose-based polymer layer stacked thereon in or on the etching solution may comprise placing the metal foil in or on the etching solution with the metal foil directed downward, such that the graphene layer can settle onto the target substrate or structure without inversion (in the step of removing the diluted and/or neutralized solution).

In a method in accordance with embodiments of the present invention, the etching solution may comprise ammonium persulfate or may consist of a solution of ammonium persulfate.

In a method in accordance with embodiments of the present invention, the etching solution may be a solution of ammonium persulfate in ultrapure water at a concentration in the range of 0.3 g to 5 g per 100 mL solvent, e.g. in the range of 3 g to 4 g per 100 mL solvent.

In a method in accordance with embodiments of the present invention, the step of diluting and/or neutralizing may comprise (or consist of) exchanging the etching solution with water, preferably ultrapure water (UPW).

In a method in accordance with embodiments of the present invention, the target substrate or support structure may comprise an (transmission) electron microscopy sample support grid.

A method in accordance with embodiments of the present invention may comprise drying the target substrate or structure with the graphene layer deposited thereon before the step of dry cleaning.

In a method in accordance with embodiments of the present invention, the activated carbon and the embedded target substrate or structure with the graphene layer may be heated to a temperature at least 5°C higher than the melting temperature of the cellulose-based polymer and this temperature may be maintained for at least 4 hours.

In a method in accordance with embodiments of the present invention, the activated carbon and the embedded target substrate or structure with the graphene layer may be heated to a temperature in the range of 250°C to 300°C and this temperature may be maintained for at least 8 hours, e.g. at least 10 hours, e.g. at least 12 hours, e.g. 15 hours or longer.

In a method in accordance with embodiments of the present invention, the step of dry cleaning may comprise (rapidly) cooling down the activated carbon, having the target substrate or structure with the graphene layer still embedded therein, after the heating of the activated carbon, using liquid nitrogen.

In a second aspect, the present invention relates to an electron microscopy sample support grid, comprising a substrate or support structure, and a graphene layer, forming a sample support, positioned on the substrate or support structure, in which the graphene layer has a thickness of less than 2.0 nm. For example, the electron microscopy sample support grid may be obtained and/or obtainable by a method in accordance with embodiments of the first aspect of the present invention.

The independent and dependent claims describe specific and preferred features of the invention. Features of the dependent claims can be combined with features of the independent claims and with features of other dependent claims as deemed appropriate, and not necessarily only as explicitly stated in the claims.

**Brief description of the drawings**

FIG 1 shows an illustrative method in accordance with embodiments of the present invention.

FIG 2 shows an illustrative dip-coating approach for use in a method in accordance with embodiments of the present invention.

FIG 3 illustrates a step of depositing the graphene layer onto the target substrate or structure in an illustrative method in accordance with embodiments of the present invention.

FIG 4 shows an HRTEM image and fast Fourier transform (FFT) of a graphene layer obtainable by a transfer method in accordance with embodiments of the present invention.

FIG 5 shows an HRTEM image and fast Fourier transform (FFT) of a comparable commercially available graphene grid, transferred onto the support grid by a prior-art method.

FIG 6 and 7 show exit wave reconstruction (EWR) images of gold nanorods surrounded by a conjugated polymer on, respectively, a prior-art graphene grid and a graphene grid obtained by a transfer method in accordance with embodiments of the present invention.

FIG 8, 9 and 10 show HRTEM images of gold nanoparticles encapsulated by surface ligands on respectively a conventional commercially available support, a prior-art ultrathin carbon film support and an optimized graphene support obtained by a transfer method in accordance with embodiments of the present invention.

FIG 11 shows lead cluster damage formed by exposure of metal halide perovskites to an electron beam in TEM imaging when using a prior-art sample support.

FIG 12 illustrates the absence of lead cluster damage due to exposure of metal halide perovskites to an electron beam in TEM imaging when using a graphene support as obtainable by a transfer method in accordance with embodiments of the present invention.

FIG 13 shows sputtering of $NaYb(Er)F_4@NaYF_4$ material observed when using a prior-art carbon grid in electron imaging.

FIG 14 shows less damage due to $NaYb(Er)F_4@NaYF_4$ sputtering when using a graphene support as obtainable by a transfer method in accordance with embodiments of the present invention.

FIG 15 illustrates charge distortion in $[Zr_6O_4(OH)_4]$ with 1,4-benzodicarboxylic acid due to a prior-art electrically insulating sample support.

FIG 16 shows that a highly conductive graphene support, as obtainable by a transfer method in accordance with embodiments of the present invention, can effectively dissipate charges to avoid such charge distortion.

FIG 17 and 18 show diffraction patterns from SEM measurements and signal to background intensity ratios of respectively a commercially available graphene grid and a graphene grid obtained by a method in accordance with embodiments of the present invention.

FIG 19 shows a diffraction pattern obtained from a sample grid in accordance with embodiments of the present invention.

FIG 20 shows a HRTEM obtained from a sample grid in accordance with embodiments of the present invention.

FIG 21 shows a diffraction pattern obtained for a prior-art sample grid 21710-25 from the supplier Ted Pella.

FIG 22 shows a HRTEM obtained for the Ted Pella prior-art sample grid.

FIG 23 shows an ADF image obtained for the Ted Pella prior-art sample grid.

FIG 24 shows a segmentation image based on the image shown in FIG 23.

FIG 25 shows a diffraction pattern obtained for a prior-art sample grid from the supplier Graphenea.

FIG 26 shows a HRTEM obtained for the Graphenea prior-art sample grid.

FIG 27 shows an ADF image obtained for the Graphenea prior-art sample grid.

FIG 28 shows a segmentation image based on the image shown in FIG 27.

FIG 29 shows a diffraction pattern obtained for a prior-art sample grid E23CL105 from the supplier ACS Materials.

FIG 30 to 32 show respectively a HRTEM image, ADF image and segmented ADF image for the ACS Materials E23CL105 prior-art sample grid.

FIG 33 shows a diffraction pattern obtained for a prior-art sample grid E32C0111 from the supplier ACS Materials.

FIG 34 to 36 show respectively a HRTEM image, ADF image and segmented ADF image for the ACS Materials E32C0111 prior-art sample grid.

The drawings are schematic and not limiting. Elements in the drawings are not necessarily represented on scale. The present invention is not necessarily limited to the specific embodiments of the present invention as shown in the drawings.

**Detailed description of embodiments**

Notwithstanding the exemplary embodiments described hereinbelow, is the present invention only limited by the attached claims. The attached claims are hereby explicitly incorporated in this detailed description, in which each claim, and each combination of claims as allowed for by the dependency structure defined by the claims, forms a separate embodiment of the present invention.

The word "comprise," as used in the claims, is not limited to the features, elements or steps as described thereafter, and does not exclude additional features, elements or steps. This therefore specifies the presence of the mentioned features without excluding a further presence or addition of one or more features.

In this detailed description, various specific details are presented. Embodiments of the present invention can be carried out without these specific details. Furthermore, well-known features, elements and/or steps are not necessarily described in detail for the sake of clarity and conciseness of the present disclosure. The present invention relates to a method of transferring a graphene layer, e.g. a graphene monolayer, onto a target substrate or support structure, such as a support frame or electron microscopy sample grid, e.g. for TEM applications. For example, a single layer of ultra-clean graphene may be provided on a TEM support, which may show improved coverage ratio and graphene cleanness after transfer onto the support when compared to prior-art approaches. Furthermore, a low graphene roughness can be achieved and a good flatness, e.g. avoiding or reducing wrinkles of the layer. It will be understood by the person skilled in the art that this method and its potential advantages are not limited to TEM supports, e.g. may find application in many other fields where a high-quality graphene layer on a substrate or support structure is of use.

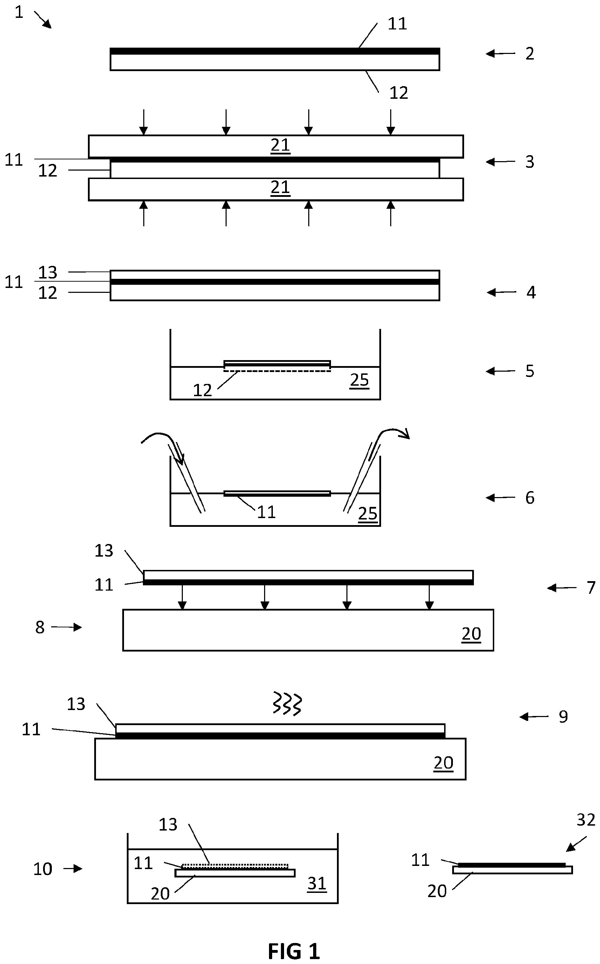

Referring to FIG 1, an illustrative method 1 in accordance with embodiments of the present invention is shown.

The method comprises obtaining 2 a metal foil 12 onto which a graphene (mono)layer 11 is provided. The graphene layer 11 may be a monolayer, e.g. having large single-crystalline domains. The graphene layer 11 may be grown by chemical vapor deposition (CVD) onto the metal foil 12, e.g. as known in the art. For example, the metal foil with graphene layer may be a monolayer CVD graphene on copper (Cu), which is for example commercially available from Graphenea Inc., Cambridge (USA). The same or similar product may be available from other high-quality graphene providers for research and/or high-tech applications. For example, such graphene foils may be available in a size of about 1 cm$^2$, e.g. 10 mm by 10 mm.

Obtaining the metal foil with the graphene (mono)layer thereon may comprise forming a graphene layer (e.g. monolayer) on a metal foil, e.g. using chemical vapor deposition. Many variations are known in the art to synthesize a graphene layer onto a metal substrate, e.g. using CVD. For example, methane gas can be used as carbon source for such deposition process, and alternatives may include e.g. petroleum asphalt. Hydrogen may be used in the process to promote carbon deposition (e.g. using a combination of methane and hydrogen at a suitably tuned flow ratio). The hydrogen may advantageously corrode amorphous carbon and improve the quality of the deposited graphene, but should be used in moderation to avoid corrosion of the graphene and/or damage to the formed crystal lattice. The carrier gas may comprise an inert gas, e.g. argon, for example in combination with hydrogen. Optionally, a catalyst may be used, such as iron nanoparticles, nickel foam and/or gallium vapor. Not only the gas flow ratio is typically tuned to optimize results, but also the ambient pressure, temperature and chamber material may need to be considered to achieve high-quality layers. Quartz may be a suitable material for the chamber and auxiliary tubing. These deposition processes are well-known in the art, and the skilled person is capable of determining such parameters with straightforward experimentation and the knowledge readily available in the field.

The method 1 may comprise mechanically flattening 3 the metal foil (supporting the graphene layer), e.g. by compressing the foil (with graphene layer) between two flat surfaces 21. For example (without limitation thereto), the metal foil may be placed between two clean microscope slides, e.g. previously cleaned with ethanol and acetone to avoid contamination of the graphene layer 11. While the step of mechanically flattening 3 is not strictly necessary, it may substantially yield a lower surface roughness of the graphene layer in the end result.

The method comprises stabilizing the graphene layer 11 by applying 4 a layer 13 of a cellulose-based polymer, e.g. cellulose acetate butyrate (CAB), onto the graphene layer 11. Other examples of cellulose-based polymers may include ethyl cellulose (EC), cellulose acetate (CA), cellulose acetate propionate (CAPr), amongst others, such as comprising formvar (polyvinyl formal), butvar (polyvinyl butyral resin) and/or glycerol.

The layer 13 may be a thin layer, e.g. having a thickness in the range of 10 nm to 500 $\mu$m, preferably in the range of 15 nm to 1$\mu$m, e.g. in the range of 15 nm to 100 nm, e.g. about 20 nm. For most purposes, a layer of 20 nm may be considered sufficient, even though higher values are not necessarily detrimental. However, the final step of cleaning away the cellulose-based polymer may be easier, faster and/or less prone to leaving contamination behind when a layer thickness in the lower ranges mentioned hereinabove is selected.

The step of applying the cellulose-based polymer layer onto the graphene layer may comprise coating the metal foil having the graphene layer attached thereto with a solution of the cellulose-based polymer, e.g. using a dip-coating method.

For example, the metal foil with graphene may be dip-coated with a coating solution, e.g. a solution of 0.25 g CAB (e.g. having an average molecular weight $M_n$ of about 30000; e.g. as commercially available from Merck KGgA; CAS no. 9004-36-8) in 100 mL ethyl acetate or another suitable solvent (e.g. a solution of 2.5 g/L CAB in ethyl acetate). Other suitable cellulose-based polymer solutions, e.g. preferably in a suitable volatile solvent, may be considered as well. Obviously, a homogenous solution can be achieved by stirring or another type of agitation, e.g. using a magnetic stirrer. The solution of CAB may have a concentration in the range of 1 g/L to 10 g/L, e.g. in the range of 1.5 g/L to 5 g/L, e.g. in the range of 2 g/L to 3 g/L, e.g. in the range of 2.3 g/L to 2.7 g/L of CAB in ethyl acetate or another suitable solvent. The CAB may have a molecular weight (Mn) in the range of $12*10^3$ to $70*10^3$, e.g. $12*10^3$, e.g. $30*10^3$, e.g. $70*10^3$.

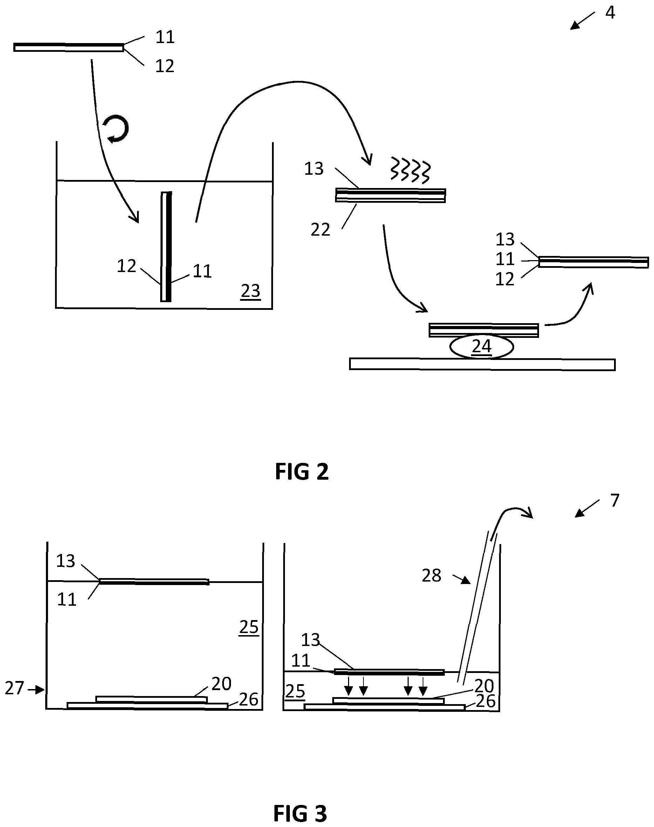

Referring to FIG 2, an illustrative dip-coating process to apply 4 the layer 13 of the cellulose-based polymer onto the graphene layer is illustrated. In this illustrative process, the metal foil 12 with graphene layer 11 is immersed in the coating solution 23, e.g. at a substantially constant (i.e. jitter-free) speed, and pulled out of the solution such that a thin layer of the cellulose-based polymer deposits on the substrate during the pull-up. Again, this pulling up may be carried out, preferably, at a constant (jitter-free) speed. This speed can be tuned to determine the thickness of the coating, and/or the immersion process can be repeated (one or more times) to achieve a desired layer thickness. Excess liquid may then be drained from the surface, and the solvent (e.g. ethyl acetate) can be allowed to evaporate, thus forming the thin layer.

The layer of the cellulose-based polymer may be applied such as to reach a layer thickness (of the cellulose-based polymer) in the range of 10 nm to 100 nm, preferably in the range of 15 nm to 30 nm, e.g. about 20 nm. It is an advantage of a dip-coating that the thickness of the layer can be easily and reproducibly controlled in this range, e.g. to achieve a layer thickness of about 20 nm.

Applying the cellulose-based polymer layer may furthermore comprise removing the cellulose-based polymer 22, e.g. CAB, from the metal foil 12 on the side that is opposite of the side covered by the graphene layer 11. For example, dip-coating may produce a stack of CAB-graphene-Cu-CAB, wherein the CAB layer 22 directly on the metal foil is removed to obtain substantially a stack of CAB-graphene-Cu, e.g. such that the metal foil (Cu in this example) can be effectively and efficiently etched away.

The latter CAB layer 22 (or another cellulose-based polymer) may, for example, be removed from the backside of the metal foil by a suitable solvent, such as acetone or isopropanol. For example, the CAB may be removed using a drop 24 of acetone, which is applied carefully to the side to be cleaned to avoid spreading to the topside of the CAB-graphene-Cu stack. A drop of acetone may be deposited on a clean surface, e.g. a glass slide, and the backside of the stack may be brought carefully into contact with the acetone with due care to avoid dispersion to the other side.

Thus, the graphene layer to be stabilized and protected is covered by a cellulose-based polymer layer, while the other side of the metal foil is substantially cleaned of this polymer, such that it can be exposed to an etchant.

The method further comprises placing 5 the metal foil 12, having respectively the graphene layer 11 (directly) and the cellulose-based polymer layer 13 (indirectly) provided on top thereof, in or on an etching solution 25 to dissolve the metal 12 supporting the graphene layer 11. For example, the metal foil 12 may be placed downside onto the surface of the etching solution to further avoid or minimize damage to the sensitive graphene layer, e.g. allowing the foil to float in or preferably on the etching solution.

The etching solution 25 may comprise ammonium persulfate ($(NH_4)_2S_2O_8$) or may consist of a solution of ammonium persulfate, e.g. in (substantially pure) water. It is an advantage that, thanks to the stabilization by the polymer, a relatively high concentration, e.g. 3.4%, of ammonium persulfate can be used, which thus contributes to a speedy process. This also has the advantage that the graphene is protected from damage and/or wrinkling.

For example, the dissolution of the metal foil can be carried out in less than 4 hours, e.g. less than 2 hours, e.g. about an hour or even less. Even though the etching time may, generally, depend on the concentration of the etching solution, the stabilizing effect of the cellulose-based polymer enables the use of a relatively high concentration, and thus a rapid etching.

For example, the etching solution 25, e.g. an ammonium persulfate solution, may be heated to a temperature in the range of 30° to 50°C, e.g. in the range of 35°C to 45°C, e.g. about 40°C, e.g. to further increase the efficiency of the chemical etching process. For example, the solution may be prepared on a hotplate (e.g. at 40°C) while preferably being continuously stirred, e.g. using a magnetic stirrer (e.g. at 650 rpm). However, it is to be noted that heating the etching solution is not necessarily required, e.g. the same etching can be achieved at room temperature, even though a faster etching can be achieved at elevated temperature.

The etching solution may be a solution of ammonium persulfate of 3.42 g in 100 mL (e.g. 34.2 g/L) in a suitable solvent, preferably water, and even more preferably ultrapure water (UPW), e.g. according to the standards defined in ASTM D5127 and/or SEMI F63. The concentration of the ammonium persulfate may be in the range of 0.3 g to 5 g per 100 mL solvent, e.g. in the range of 0.3 g to 4 g per 100 mL solvent, e.g. in the range of 2 g to 4 g per 100 mL solvent, e.g. in the range of 3.0 g to 3.5 g per 100 mL solvent, e.g. in the range of 3.3 g to 3.4 g per 100 mL solvent. While excessive etching concentrations could potentially damage the graphene, it is noted that higher concentrations may fasten the etching process considerably. However, if the exposure time is adjusted accordingly, a copper foil can be etched away with concentrations of etchant $((NH_4)_2S_2O_8)$ as low as, e.g., 0.34g/100mL UPW.

In order to prevent contamination by the dissolved metal of the metal foil, the method comprises diluting and/or neutralizing 6 the etching solution 25 before removing the graphene layer, which is now only attached to (and stabilized by) the remaining cellulose-based polymer layer. For example, this dilution may comprise a gradual dilution (and/or neutralization) using water, e.g. ultrapure water, to remove the metal, e.g. copper, residues. For example, clean solvent, e.g. ultrapure water, may be added repeatedly, e.g. while siphoning off excess solution (e.g. using a pipette).

The etching solvent may thus be removed by exchanging it, e.g. in steps, with water (preferably UPW), for example until the pH has reached a value sufficiently close to pure water, e.g. in the range of 6.9 to 7.1 or substantially 7.0. For example, the etching solvent may be exchanged with water repeatedly until the pH value is increased from an acid environment (e.g. about 3) to neutral (e.g. about 7).

This step avoids damage to the target substrate or structure by the remaining etchant, e.g. particularly in case the target substrate or structure is sensitive to oxidation. Moreover, even if the target substrate or structure is not oxidation-sensitive, contamination by residues of the dissolved metal is reduced or prevented.

While the etching solvent may be alternatively exchanged with another solvent, such as isopropanol and/or acetone, experiments have shown that these alternatives could potentially lead to a higher contamination and/or could pose problems, e.g. of the graphene tending to attach more easily to the wall of the recipient. Nonetheless, embodiments using another solvent than water for dilution and/or exchange of the etching solution are not necessarily excluded.

The method further comprises depositing 7 the graphene layer 11 (directly) onto a target substrate or structure 20. It is an advantage of a method in accordance with embodiments that the graphene layer, floating in or on the diluted etching solution, can be easily scooped onto the target substrate or structure. The method may thus also comprise providing a target substate or structure onto which the graphene layer is to be transferred.

Referring to FIG 3, depositing 7 the graphene layer onto the target substrate or structure may comprise placing 27 the target substrate underneath the graphene layer floating in the solution 25, e.g. the diluted and/or neutralized etching solution 25 (e.g. substantially exchanged by the solvent, preferably water, even more preferred UPW), and removing 28 the solution until the graphene layer settles onto the target substrate or structure 20. For example, the solution may be removed by a (e.g. microliter) pipette, or another suitable method, such as by a pump or by evaporation (or any combination thereof).

The target substrate or structure may, for example, be placed 27 on top of a piece of filter paper 26 or other suitable protective (e.g. shock absorbing) material at the bottom of the recipient containing the solution 25, and the graphene layer 11 can thus be softly lowered on top of the substrate or structure by gently removing the solution without risk (or with reduced risk) of damage. It will also be appreciated that such filter paper 26 or similar carrier material can be used to easily manipulate the substrate or structure, e.g. to remove the construct from the recipient once the graphene layer has been deposited thereon.

For example, the target substrate or structure 20 may comprise one or more transmission electron microscopy sample grids. As an example, for a 10 mm by 10 mm graphene layer, 9 TEM grids, having a diameter of 3.05 mm, may be arranged in a grid pattern of 3 rows by 3 columns on the filter paper inside an area of 10 mm by 10 mm, such that the graphene layer can be deposited on top of this pattern of TEM grids.

For example, the target substrate or structure 20 may comprise a bare 2000 M gold TEM grid. Other grid materials are not necessarily excluded, e.g. copper, nickel, molybdenum, platinum, rhodium, silicon nitride etc. (or alloys or mixtures of multiple materials). Other mesh sizes, e.g. 1000, 1500, 3000, etc., are not necessarily excluded, and the pitch of the grid may equally vary. The TEM grid size may be a standard size of 3.05 mm diameter, even though embodiments are not necessarily limited thereto (e.g. another example being 2.3 mm). Such TEM grid may comprise a holey CAB layer onto which the graphene layer, after transfer, may be supported. The TEM grid may also comprise an amorphous carbon layer.

Even though reference is made to the 'solution' for the sake of clarity, it will be understood that the 'solution' at this stage in the process may be substantially nothing more than water, e.g. if the aforementioned step of removing 6 (by diluting and/or neutralizing) the etching solvent was carried out effectively.

It will also be understood that the position of the graphene layer, while lowering it on top of the substrate or structure can be controlled during this step, e.g. by gentle nudges and/or by the controlling the (direction of the) flow by which the solution is being removed, such that a good alignment of the graphene layer on the target substrate or structure can be easily obtained.

Experiments have demonstrated that gently lowering the graphene layer onto the target, by removing the liquid medium, improves the obtained coverage and roughness of the final construct. For example, when compared to a similar approach in which the graphene layer is scooped from above onto the target, a higher coverage and lower roughness are obtained by letting the graphene layer settle on top of the target.

The steps described hereinabove can be automated in a straightforward manner, such that even better precision in alignment and reproducibility of the manufactured item (target substrate or structure having the graphene layer provided thereon) can be achieved and/or such that a high processing speed can be achieved. It will also be clear that this process can be easily scaled up to manufacture many of such items simultaneously. Moreover, the limiting step in the efficiency of the process described hereinabove (disregarding any prior steps for manufacturing the target substrate/structure and/or creating the graphene layer, e.g. by CVD) appears to be the etching time, which, as already mentioned can be performed relatively quickly, e.g. at least compared to some prior art approaches that rely on such chemical etching step.

The method may further comprise drying 9 the target substrate or structure 20 with the graphene layer 11 deposited thereon. For example, by placing the construct on a hotplate, e.g. at a temperature in the range of 25°C to 50°C, e.g. in the range of 30°C to 40°C, e.g. about 35°C. It is to be noted that, when placed on a filter paper or other suitable carrier material, it is not only easy to remove the construct from the recipient that contained the diluted etching solution (e.g. substantially water) for drying, but that the construct may also be protected from direct heat in the drying process. It is also noted that the drying may also be carried out in situ, e.g. without removing from the recipient, to avoid any damage due to manipulation.

The method further comprises a dry cleaning 10 (a dry heating treatment) to remove the cellulose-based polymer layer 13. In this step, the target substrate or structure 20 with the graphene layer 11 and the remaining cellulose-based polymer 13 are embedded in activated carbon 31. For example, the activated carbon may be provided in a recipient (e.g. a petri dish) or pile, a pit may be formed in the activated carbon, and the construct may be buried in this pit, substantially covering the construct from all sides by the activated carbon (i.e. closing the pit). For example, a heap of 0.7 cm activated carbon may be provided, and the construct may be buried at a depth of about 0.5 cm in this heap.

The activated carbon 31 in which the construct is embedded may then be heated, e.g. to a temperature in the range of 250°C to 300°C, for example at a rate of 5°C per minute (embodiments not necessarily limited to this illustrative temperature range and/or heating rate). Specifically, the target temperature may be chosen to be higher than the melting temperature of the cellulose-based polymer, but conservatively selected to avoid damage to the graphene and/or the target substrate or structure. For example, the target temperature may be at least 5°C, preferably at least 10°C, above (an upper limit of) the melting temperature.

This target temperate is maintained for a sufficient time, e.g. at least 4 hours, e.g. at least 8 hours, e.g. for a time in the range of 10 hours to 24 hours, e.g. 15 hours. After cooling down (and removing 32 of the construct from the carbon, or vice versa), the target substrate or structure 20 remains with the graphene layer, while the polymer is cleaned away.

By heating in activated carbon, e.g. for 15h at 300°C, the cellulose-based polymer, e.g. CAB, and potentially other contaminants can be efficiently removed. The melting temperature of CAB is between 170°C and 240°C, such that a temperature slightly above the melting temperature of the polymer can liquify the material and allow it to be absorbed by the carbon. It is to be noted that other cellulose-based polymers may equally be suitable for a method in accordance with embodiments, and the temperature of the thermal treatment can be adjusted accordingly.

Without the aid of the activated carbon, substantially higher temperatures may be required for sufficiently cleaning the polymer away. For example, a vacuum thermal treatment may need a temperature in the range of 700°C to 900°C to achieve an acceptable level of cleanness (e.g. at least for application of the product as TEM support), which can lead to the destruction of the sensitive layer, e.g. resulting in a lower coverage, as well as corrugation.

The dry cleaning step 10 may also comprise cooling down the target substrate or structure 20 with the graphene layer 11 (e.g. while still embedded in the activated carbon 31) after the heat treatment. By quickly cooling down the activated carbon pile, degassing of residues that were absorbed by the activated carbon during the cleaning process can be avoided or reduced. Thus, the cooling may be performed at a high rate of decreasing temperature, such as at least 10°C/s (i.e. the temperature may change with a rate ≤-10°C/s). For example, the activated carbon 31 with the embedded target substrate or structure 20 (and the graphene layer 11 thereon) may be exposed to (e.g. placed in; not necessarily *directly* exposed to) liquid nitrogen after the aforementioned heating. Thus, the temperature (e.g. 300 °C) of the activated carbon pile (and the embedded construct) after the heat treatment may be decreased rapidly. Direct contact between the liquid nitrogen and the activated carbon (and/or the embedded construct) may be preferably avoided. For example, the activated carbon pile may be contained in a (e.g. shallow) recipient, such as a petri dish, and this recipient may be placed in a larger container containing the liquid nitrogen, wherein care is taken that the volume of the liquid nitrogen in the larger container is below a predetermined threshold to avoid overflowing of the liquid nitrogen from the larger container into the recipient. In view of the large temperature difference between the heated activated carbon and the liquid nitrogen, a relatively short cooling time may suffice, e.g. in the range of 5 to 20 seconds, preferably in the range of 10 to 15 seconds. The duration of this cooling step may be determined such as to be long enough to sufficiently cool down the activated carbon (to avoid said degassing), but also to be not too long, to prevent the (potentially damaging) formation of ice in the construct.

After transferring the graphene onto a TEM support (for example), an advantageously low graphene roughness can be achieved, e.g. down to 0.2 nm (potentially even less).

Furthermore, in embodiments where the target structure is a TEM grid, e.g. an Au or Cu grid, this target structure may already comprise a holey CAB layer (as known in the art). However, this holey CAB layer on the primary grids can be substantially protected during the treatment by the amorphous carbon layer of such TEM grids. During the heating treatment, these initial layers are advantageously not being removed and act (as intended) as a further support for the graphene.

Experiments have shown that this approach results in a clean graphene layer, for which a signal to background ratio in TEM measurements can be achieved that can be, for example, six times higher than observed for comparable TEM graphene grids manufactured by a method as known in the art. Furthermore, substantially less contamination is observed during TEM analysis compared to commercially available TEM graphene grids.

In a second aspect, the present invention relates to an electron microscopy sample support grid, comprising a substrate or support structure, and a graphene layer positioned on this substrate or support structure. The graphene layer thus forms a sample support onto which a sample can be placed for analysis. Furthermore, the graphene layer has a thickness of less than 2.0 nm.

Such sample support grids have already been discussed hereinabove, and are furthermore known as such in the art. Features of such sample support grid, e.g. as discussed hereinabove or otherwise well-known in the field, are considered to correspond to (at least optional) features of an electron microscopy sample support grid in accordance with embodiments of the present invention. For example, the sample support grid may comprise metal wires and/or metal layer(s) to form a support structure (primary grid), by which the graphene layer is supported. Examples of such metal materials include copper and gold, among others. The device may also comprise a holey CAB layer, or suitable alternative thereof. For example, a (e.g. CAB) foil or layer, supported by the primary grid, may be perforated to form a collection of holes with certain size, shape and/or arrangement. For example, these holes may range between 0,5 $\mu$m and 5 $\mu$m. It is an advantage of such holey layer that openings (holes) can be achieved having a diameter in the micrometer or even sub-micrometer range, whereas, for example, holes formed by crossing metal grid lines may typically have larger dimensions, e.g. in the 5 $\mu$m to 200 $\mu$m range.

The support substrate or structure may thus comprise holes (through-holes) which are covered by the graphene layer (or a plurality of such graphene layers, e.g. different segments of graphene may cover different holes). These holes may for example be formed by grid openings in a grid pattern of the support structure, e.g. openings between crossing grid lines of a primary grid, or by holes in a holey (e.g. CAB) layer, or a combination thereof.

Further optional features are well-known to the skilled person, and therefore not discussed in detail. For example, the grid may comprise a frame structure (e.g. formed from a substrate, such as a semiconductor substrate or a metal around the rim of the grid to allow a reliable, stable and sufficiently strong mechanical mounting of the grid in an electron microscopy apparatus.

By applying a method of manufacture in accordance with embodiments of the first aspect of the present invention, as discussed hereinabove, a quality of the graphene sample support can be achieved that is substantially better than what can be achieved using prior-art methods, at least in so far as is known and could be ascertained by the inventors.

Among other quality metrics, such as improved cleanness, uniformity of thickness, flatness, etc., a consistent and consistently small thickness of the graphene layer, after transfer onto the supporting grid structure or substrate, of less than 2.0 nm can be achieved, whereas prior art methods failed to provide such thin graphene layers in experimental tests. Even though, theoretically, a monoatomic layer of graphene has a definite thickness (e.g. 0.34 nm if defined in terms of the interlayer distance between graphene sheets in a graphite structure), it will be understood that the actually observed (i.e. observable; measurable, empirical) thickness can vary due to various quality-related factors. To give a few examples, the observed thickness can increase due to pollutants, or the observed thickness can increase due to wrinkling, folding or other deviations from a (ideally) flat surface, or extra graphene layers.

The determine the thickness of the graphene layer in an unambiguous and definite way, the following protocol can be used. In this protocol, the local thickness is calculated from electron energy loss spectroscopy (EELS) spectra, which provides an indication for the presence of hydrocarbons and the number of graphene layers. As known in the art, EELS can be used to determine the local thickness of a wide range of materials in a reliable and repeatable manner.

Preferably, EELS spectra are collected in five random locations (sample points) over the surface area of the graphene layer. This approach was applied in the illustrative comparison (see further hereinbelow) of a sample support in accordance with embodiments of the present invention (i.e. obtained by a method as discussed hereinabove) to similar prior-art sample support devices comprising a graphene layer, as commercially available. However, to avoid any possible ambiguity in testing a device, a sample support grid in accordance with embodiments of the present invention can be detected by measuring the thickness (using the EELS log-ratio absolute method referred to hereinbelow) of the graphene layer in a single point that corresponds to the geometrical center of the graphene layer, or to the geometrical center of that part of the graphene layer that is suitable and clearly intended for effective use as the sample support and observation area.

The local thickness can be calculated from the EELS data by the log-ratio absolute method, i.e. in accordance with the following equation:

$$t = \lambda \cdot log \left( \frac{I_t}{I_0} \right)$$

in which $t$ refers to the thickness to be determined, and $\lambda$ refers to the mean free path of electron inelastic scattering. The ratio of intensity for zero-loss electrons ($I_0$) to the total transmitted intensity ($I_t$) can be directly obtained by the EELS measurement. Appropriate values of this mean free path parameter $\lambda$ are generally known for most materials of interest, including carbon-based materials, such as graphene. This equation is based on the assumption of a Poisson distribution of the electron energy loss. This approach to determine an absolute measure of the specimen thickness is considered to be well-known and, furthermore, is implemented in many (or most) standard electron microscopy software packages, such as Digital Micrograph (DM).

The application of this technique to a vacuum region (in a hole) allows a background signal to be determined during the measurement. In the illustrative comparison discussed hereinbelow, the average value that was observed for such vacuum hole was 0.78 nm, which was subtracted from the calculated values. Thus, in a test protocol to measure the thickness of the graphene layer, a background signal (thickness measurement) may be subtracted from the calculated thickness (e.g. for the geometrical center of the layer), in which the background signal is a thickness value calculated on the basis of a vacuum region.

The total error $\Delta X$ of the (averaged) thickness measurement, $X = \frac{1}{n} \sum_{i=1}^{n} t_i$, can be estimated as $\Delta X = \sqrt{E_s^2 + E_a^2}$, where $E_a$ is the statistical error $E_a = t_{n-1} \frac{s}{\sqrt{n}}$, with s being the empirical standard deviation and n the number of measurements (e.g. 5). $E_s$ represents the accuracy of the method, which can be estimated to be 20% of the measured value.

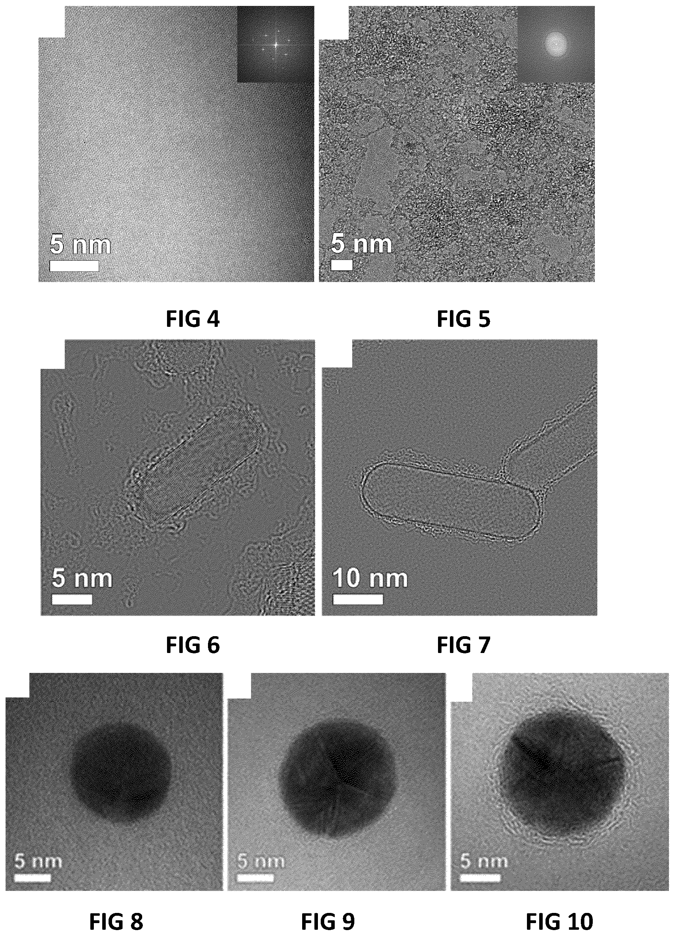

The following example demonstrates the quality achievable for a graphene layer transferred onto a TEM grid for use as a sample support. FIG 4 shows an HRTEM image and Fourier transform of a graphene layer obtainable by a transfer method in accordance with embodiments of the present invention. For comparison, FIG 5 shows an HRTEM image and Fourier transform of a comparable commercially available graphene grid. As can be seen, residues from the polymer, used in the prior-art transfer method, are clearly visible in FIG 5, while substantially absent in FIG 4. A method in accordance with embodiments can be applied to achieve a much cleaner graphene layer and a signal to background ratio of up to about 6 times higher. In experimental validation, a method in accordance with embodiments of the present invention has been successfully applied to 200 M Au grids, with a 10 nm holey CAB and 10 nm amorphous carbon layer.

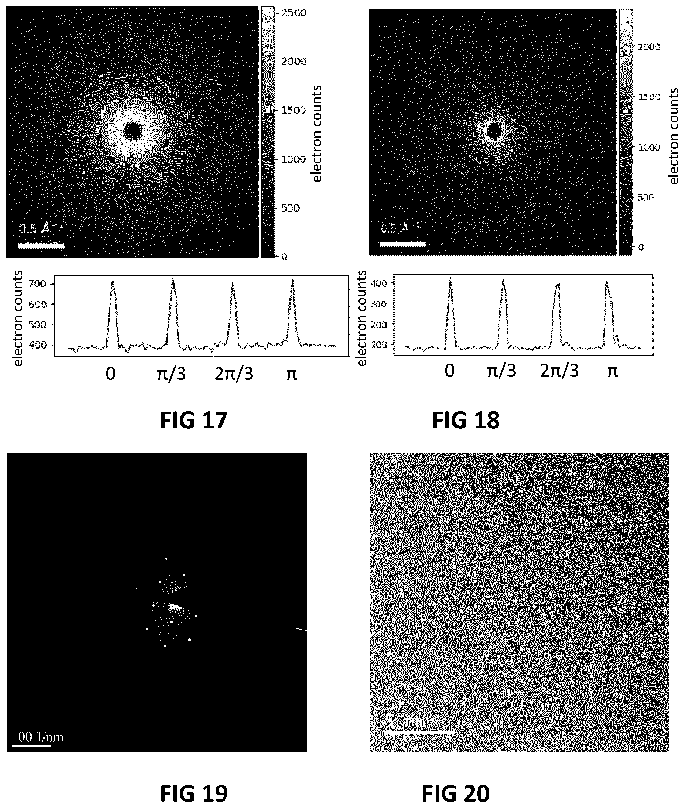

Referring to FIG 17 and 18, diffraction patterns from SEM measurements and signal to background intensity ratios are demonstrated of respectively (FIG 17) a commercially available graphene grid and (FIG 18) a graphene grid obtained by a method in accordance with embodiments. A better signal to background intensity ratio is observed for the improved graphene grid, i.e. about 4:1 as compared to about 7:4.

Cleaner graphene grids enable the visualization of crystalline structure, and the ability to better distinguish organic residues from the transfer process and the organic compounds being investigated. For example, for carbon-based materials, e.g. carbon nanotubes, this may be highly advantageous. FIG 6 and 7 show Exit Wave Reconstruction (EWR) images of gold nanorods surrounded by a conjugated polymer on, respectively, a prior-art graphene grid and a graphene grid that can be prepared with a transfer method in accordance with embodiments of the present invention.

The thickness of the support also influences the quality. For example, to visualize surface ligands or polymer coatings, a high-quality and clean graphene layer may be essential. FIG 8, 9 and 10 show high resolution TEM (HRTEM) images of gold nanoparticles encapsulated by surface ligands (thiol polyethyleneglycol methoxy SH-mPEG$_{5000}$-OCH$_3$) on different supports: respectively a commercially available support (Quantifoil), an ultrathin (2 nm) carbon film support as known and an optimized graphene support. The small thickness of graphene layers can enable the TEM characterization of soft-hard interfaces and the detection of the ligands, whereas the use of the optimized graphene support as obtained by a transfer method in accordance with embodiments achieves the best contrast in TEM and HRTEM modes.

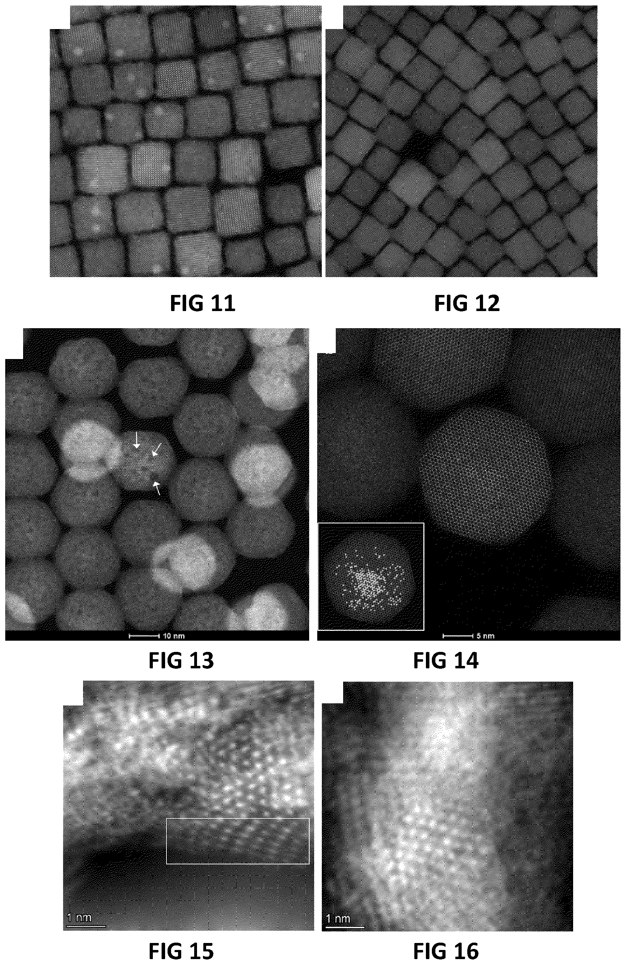

Furthermore, the high thermal and electrical conductivity of graphene offer further advantages. For example, metal halide perovskites are highly beam-sensitive materials; lead clusters are nearly instantly formed during TEM analysis. FIG 11 shows such Pb clusters, while FIG 12, which was acquired using a graphene grid to minimize cluster formation, appears to alleviate or avoid this problem. NaYb(Er)F$_4$@NaYF$_4$ nanoparticles are another example of highly beam-sensitive samples. On a graphene grid, it is however possible to attain atomic resolution and their core can be identified. FIG 13 shows sputtering of the NaYb(Er)F4@NaYF4 material observed using carbon grids, while a graphene grid, see FIG 14, appears to reduce the damage. A detailed image of the core is furthermore shown in the latter image, to demonstrate that the identification and study of the core is enabled by such graphene grids.

A high electric conductivity also avoids charging effects as would be present on insulating samples or supports.

FIG 15 shows such charge distortion due to an insulator (see marked rectangular area), whereas a graphene support (see FIG 16) effectively dissipates this charge, enabling the visualization of the sample by Integrated differential phase contrast (iDPC).As already mentioned hereinabove, the graphene TEM grid obtainable by a method in accordance with embodiments of the present invention was compared to prior-art graphene TEM grids that are commercially available. For these grids, the thickness of the graphene layer was determined using the EELS method discussed hereinabove (based on 5 randomly sampled points). Additionally, for each grid, four HRTEM images were obtained at random locations, as well as ten ADF STEM images and diffraction patterns in five windows. Two regions were selected per window in a hole of the support film, and in a random manner to ensure representativity. The diffraction patterns show the number of graphene layers present and also give an indication of the amount of amorphous phase that is present.

The ADF STEM images were segmented using an algorithm, implemented in Matlab, with multilevel thresholds using Otsu's method. The segmentation result shows clean graphene areas as black regions and regions comprising different structures or materials, e.g. polymer, hydrocarbons, copper nanoparticles, etc., as various grey intensity values. The average percentage of clean graphene area is then calculated (area of 'black' segmentation component over total area) and averaged over the ten different ADF STEM images. The average percentages of 'clean' graphene that were thus obtained are summarized in the table hereinbelow. This estimate area percentage of clean graphene is, in a limited sense, related to the 'coverage', a property that is commonly referred to in publications and/or commercial information regarding such graphene grids. However, it is to be noted that this measure is indicative of the relative area covered by clean graphene, whereas 'coverage' refers to the area covered by graphene regardless of it being clean or not. In other words, the estimated area percentage can be considered as a measure of cleanness.

| Prior-art TEM grid | Measured thickness | Est. area pct. of clean graphene |
|---|---|---|
| Ted Pella 21710-25 | 7.4 $\pm$ 11.1 nm | 32.3 % |
| Graphenea | 20.9 $\pm$ 17.0 nm | 9.9 % |
| ACS Materials E23CL105 | 9.2 $\pm$ 4.4 nm | 29.4 % |
| ACS Materials E32C0111 | 8.6 $\pm$ 12.1 nm | 24.1 % |

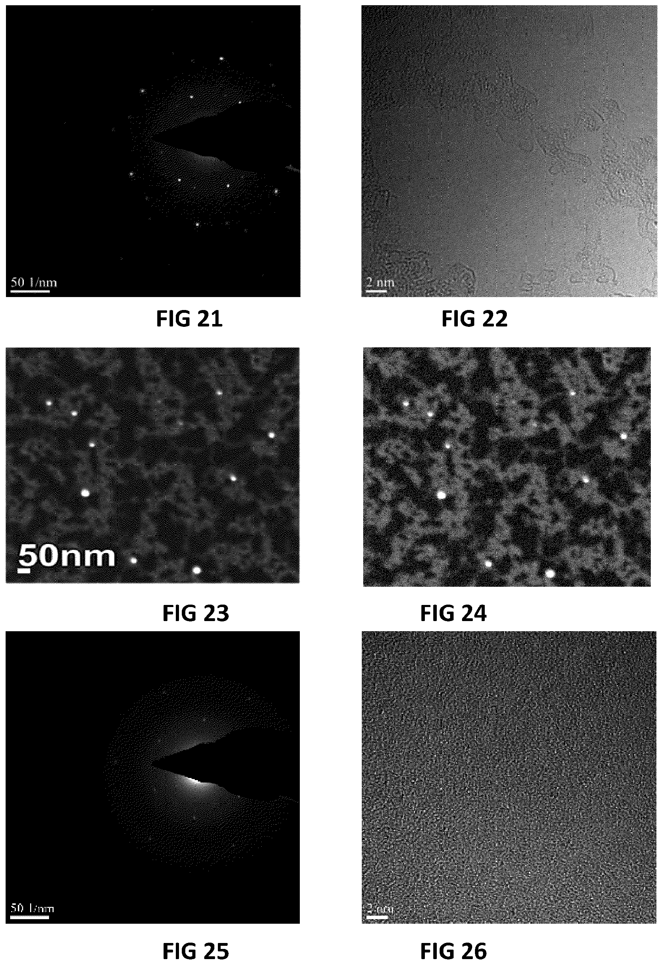

The grid 21710-25 is described by the manufacturer Ted Pella as a pelco single layer graphene TEM support film on lacey carbon (300 M Cu). FIG 21 and 22 show respectively a diffraction pattern and HRTEM image of this grid. Additional spots can be observed in the diffraction pattern, which might be attributable to copper nanoparticle contaminants. To illustrate the mentioned procedure for estimating the area percentage of clean graphene, FIG 23 shows one of the acquired ADF images for this grid, and FIG 24 the corresponding segmented image.

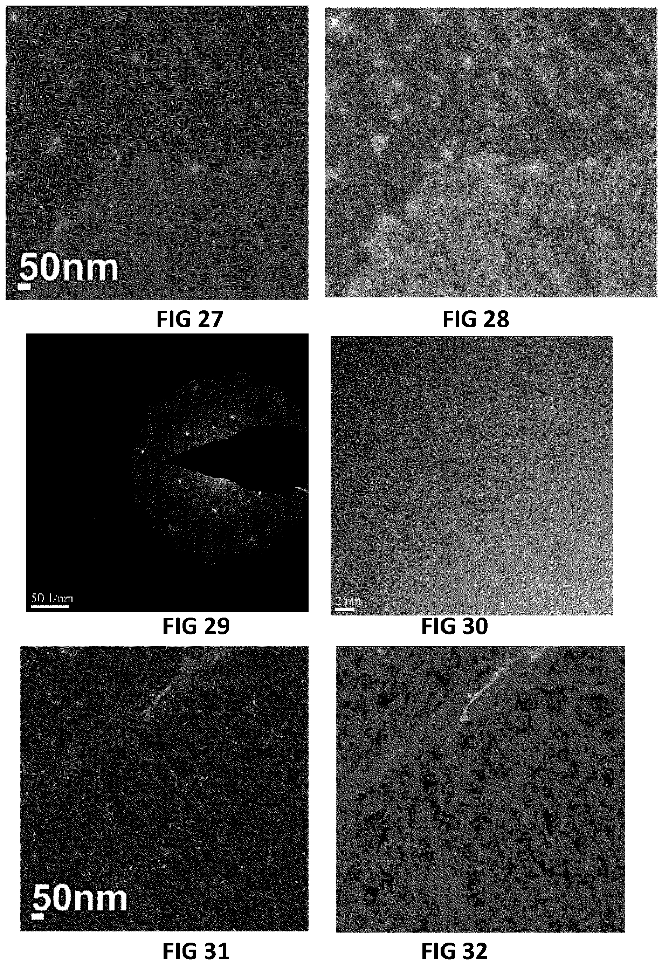

The Graphenea sample support is described as suspended graphene on TEM grid (Quantifoil gold). FIG 25 and 26 show respectively a diffraction pattern and HRTEM image of this grid. FIG 27 shows one of the acquired ADF images for this grid, and FIG 28 the corresponding segmentation.

The sample grids from the supplier ACS Materials relate to graphene on a lacey carbon TEM grid of respectively 300 M Cu (E23CL105) and 2000 M Cu (E32C0111), and to graphene on a silicon nitride TEM grid with 2 $\mu$m holes (E0BSN105).

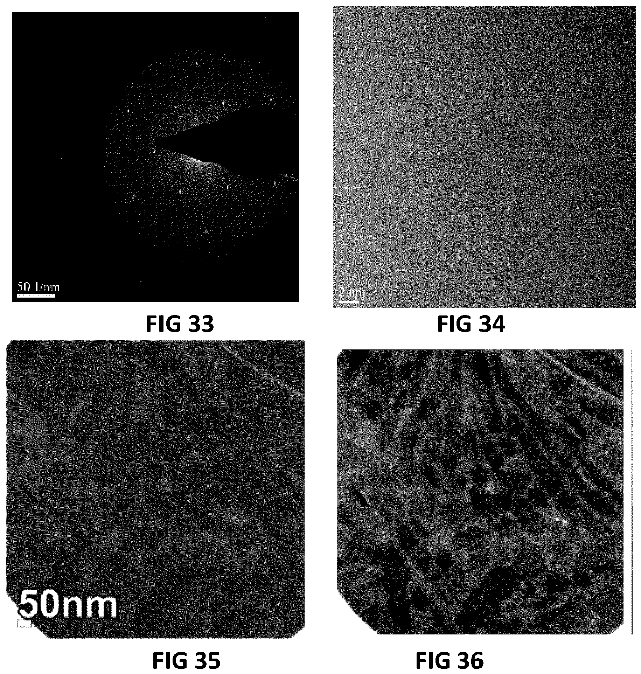

FIG 29 to 32 show, respectively, a diffraction pattern, an HRTEM image, an ADF image and the corresponding segmentation of the ADF image for the E23CL105 grid, and, likewise, in the same order, FIG 33 to 36 show corresponding images for the E32C0111 grid.

The alleged graphene area coverage was, for all of the mentioned prior-art examples, at least 75%, and, in the case of the Graphenea TEM grid, even greater than 95%.

**Claims**

1.  A method (1) of transferring a graphene layer onto a target substrate or support structure, the method comprising:

    - obtaining (2) a metal foil (12) onto which the graphene layer (11) is provided,
    stabilizing the graphene layer (11) by applying (4) a layer (13) of a cellulose-based polymer onto the graphene layer (11),
    - placing (5) the metal foil (12) having respectively the graphene layer (11) and the cellulose-based polymer layer (13) stacked thereon in or on an etching solution (25) to dissolve the metal foil (12) supporting the graphene layer (11),
    - diluting and/or neutralizing (6) the etching solution (25) after the metal foil (12) has been dissolved,

- depositing (7) the graphene layer (11) directly onto the target substrate or structure (20) by placing (27) the target substrate or structure underneath the graphene layer floating in or on the diluted and/or neutralized etching solution (25) and removing (28) the diluted and/or neutralized etching solution until the graphene layer settles onto the target substrate or structure, and
- dry cleaning (10) the target substrate or structure (20) with the graphene layer (11) deposited thereon to remove the cellulose-based polymer layer (13) by embedding the target substrate or structure with the graphene layer in activated carbon (31) and heating the activated carbon.

2. The method of claim 1, wherein the activated carbon (31) and the embedded target substrate or structure with the graphene layer are heated to a temperature at least 5°C higher than the melting temperature of the cellulose-based polymer and said temperature is maintained for at least 4 hours.

3. The method of any of the previous claims, comprising drying (9) the target substrate or structure (20) with the graphene layer (11) deposited thereon before said step of dry cleaning (10).

4. The method of any of the previous claims, wherein said diluting and/or neutralizing (6) comprises exchanging the etching solution (25) with water or ultrapure water.

5. The method of any of the previous claims, comprising mechanically flattening (3) the metal foil (12) with the graphene layer (11) provided thereon before applying (4) said cellulose-based polymer layer (13).

6. The method of any of the previous claims, wherein placing (5) said metal foil (12) having respectively the graphene layer (11) and the cellulose-based polymer layer (13) stacked thereon in or on the etching solution (25) comprises placing the metal foil (12) in or on the etching solution with the metal foil directed downward, such that the graphene layer can settle onto the target substrate or structure without inversion.

7. The method of any of the previous claims, wherein said cellulose-based polymer layer (13) comprises of consists of cellulose acetate butyrate.

8. The method of any of the previous claims, wherein applying (4) said cellulose-based polymer layer (13) comprises coating the metal foil (12) having the graphene layer (11) attached thereto with a solution (23) of the cellulose-based polymer using a dip-coating method.

9. The method of claim 8, wherein applying (4) said cellulose-based polymer layer (13) comprises removing the cellulose-based polymer (22) that was dip-coated directly onto the metal foil (12) on the side opposite of the side where the graphene layer (11) is provided such that the metal foil is exposed and the graphene layer (11) remains covered by the cellulose-based polymer (13).

10. The method of any of the previous claims, wherein said cellulose-based polymer layer (13) has a thickness in the range of 10 nm to 500 $\mu$m or a thickness in the range of 15 nm to 30 nm or a thickness of 20 nm.

11. The method of any of the previous claims, wherein said target substrate or support structure comprises an electron microscopy sample support grid.

12. The method of any of the previous claims, wherein said obtaining (2) of the metal foil (12) onto which the graphene layer (11) is provided comprises growing the graphene layer onto the metal foil by chemical vapor deposition.

13. The method of any of the previous claims, wherein said etching solution (25) is a solution of ammonium persulfate, preferably in ultrapure water, at a concentration in the range of 0.3 g to 5 g per 100 mL solvent.

14. The method of any of the previous claims, wherein said step of dry cleaning (10) comprises cooling down the activated carbon (31), having the target substrate or structure (20) with the graphene layer (11) embedded therein, after said heating of the activated carbon, using liquid nitrogen.

15. An electron microscopy sample support grid, comprising a substrate or support structure, and a graphene layer, forming a sample support, positioned on said substrate or support structure, wherein said graphene layer has a thickness of less than 2.0 nm.

**FIG 1**

**FIG 2**

**FIG 3**

**FIG 4**

**FIG 5**

**FIG 6**

**FIG 7**

**FIG 8**

**FIG 9**

**FIG 10**

FIG 11

FIG 12

FIG 13

FIG 14

FIG 15

FIG 16

**FIG 17**

**FIG 18**

**FIG 19**

**FIG 20**

**FIG 21**

**FIG 22**

**FIG 23**

**FIG 24**

**FIG 25**

**FIG 26**

**FIG 27**

**FIG 28**

**FIG 29**

**FIG 30**

**FIG 31**

**FIG 32**

**FIG 33**

**FIG 34**

**FIG 35**

**FIG 36**

Europäisches
Patentamt

European
Patent Office

Office européen
des brevets

# EUROPEAN SEARCH REPORT

Application Number

EP 20 21 3252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUK JI WON ET AL: "Transfer of CVD-Grown Monolayer Graphene onto Arbitrary Substrates", ACS NANO, vol. 5, no. 9, 6 September 2011 (2011-09-06), pages 6916-6924, XP055788576, US ISSN: 1936-0851, DOI: 10.1021/nn201207c Retrieved from the Internet: URL:https://pubs.acs.org/doi/pdf/10.1021/nn201207c> | 15 | INV. C01B32/194 |
| A | * page 6919, right-hand column, paragraph 2 - page 6920, left-hand column, paragraph 1; figures 1, 4 * | 1-14 | |
| X | US 9 388 048 B1 (ZHOU CHONGWU [US] ET AL) 12 July 2016 (2016-07-12) * column 16, line 17 - line 28; figure 31 * | 15 | |
| A,D | EP 3 135 631 A1 (GRAPHENEA S A [ES]) 1 March 2017 (2017-03-01) * claims 1-15 * | 1-14 | **TECHNICAL FIELDS SEARCHED (IPC)**<br><br>C01B |
| A | EP 3 367 423 A1 (GRAPHENEA S A [ES]) 29 August 2018 (2018-08-29) * claims 1-15 * | 1-14 | |

The present search report has been drawn up for all claims

| Place of search | Date of completion of the search | Examiner |
|---|---|---|
| The Hague | 8 June 2021 | Sevillano Rodriguez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 3252

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2021

| Patent document cited in search report | | Publication date | Patent family member(s) | | Publication date |
|---|---|---|---|---|---|
| US 9388048 | B1 | 12-07-2016 | NONE | | |
| EP 3135631 | A1 | 01-03-2017 | EP | 3135631 A1 | 01-03-2017 |
| | | | US | 2017057812 A1 | 02-03-2017 |
| EP 3367423 | A1 | 29-08-2018 | EP | 3367423 A1 | 29-08-2018 |
| | | | US | 2018247725 A1 | 30-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3135631 A1

- EP 2679540 A1